# EUROPEAN PATENT APPLICATION

(11) **EP 1 670 087 A1**
(43) Date of publication of application: **14.06.2006**
(21) Application number: 04028567.8
(22) Date of filing: 02.12.2004
(51) Int. Cl.: H01M 8/02

(54) **Control of carbon coating microcrackings in fabrication of fuel cell GDL electrode layer (s)**

(71) Applicant: Albany International Techniweave, Inc., Rochester, NH 03867 (US)
(72) Inventor: Lecostaouec, Jean-Francois, Hooksett NH 03106 (US); Paquin, Maurice R., Plainville MA 02762 (US); Kennedy, Paul, North Hampton New Hampshire 03862 (US)
(74) Representative: Bugnion Genève

(57) **Abstract**

A coating for a gas diffusion layer (GDL) of a fuel cell or battery. The coating comprises a dispersion of carbon black, a fluoropolymer, and one of graphite and carbon particulates, in which the size of the particulates are substantially larger than the size of the particles of carbon black and provide structural integrity to the coating so as to minimize cracking thereof. The size of the particles of carbon black may lie within the range of approximately 13-95 nm. The carbon particulates may be chopped carbon fibers, carbon or graphite flakes or platelets, carbon nanotubes, carbon fibrils, or carbon whiskers. The carbon particulates may have a high length to diameter ratio.

## Description

### Field of the Invention

The present invention relates to a coating to be applied to the surface(s) of a gas diffusion layer or electrode of a fuel cell or battery containing carbon or graphite particulates.

### Background of the Invention

Gas diffusion layers ("GDLs") of fuel cells or batteries, which may be carbon fibers in a nonwoven or woven form, are generally coated on one or more sides with a substance to form an electrical contact between the GDL and either a membrane or bipolar plate within the fuel cell. Such coatings may be fabricated from a mixture of carbon black (also known as Acetylene Black or amorphous black) and a fluoropolymer such as Teflon® . Other material such as particulates of varying size to control desired properties such as enhanced electrical conductivity or to support a catalyst may also be included.

In order to achieve high fuel efficiency for the fuel cells or batteries, control over the size and porosity of the coating should be exercised. The porosity affects several functions including forming further pathways to control the flow of fuel to a catalyst and membrane, regulating the amount of water near the membrane, and supporting the catalysts themselves.

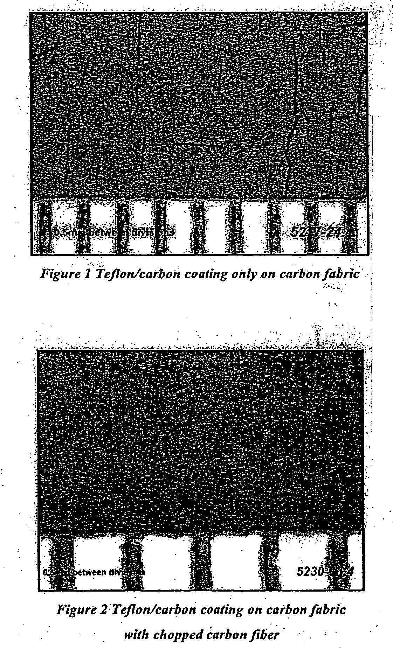

The coatings are formed using aqueous dispersions having low solid loadings. When a large amount of fluid is removed, cracks ("mud cracks") frequently occur in the coating on the surface of the GDL. Typical cracking involves a coating defect consisting of a break in the cured film, which exposes the bare substrate. It usually occurs during fabrication of the coated substrate when the coating is too brittle or the adhesiveness to the substrate is too low. The cracks may become more pronounced when heavier coatings are deposited on the surface of the GDL substrate. The more severe the cracking, the lower the effectiveness of the GDL to accomplish some of its functions. An example of such cracks in the coating of the surface of the GDL is shown in Figure 1.

Conventional methods to eliminate cracks in the coating such as increasing the binder, controlling the drying rate, successive thin pass coatings and increasing solids have been used but have not been found to be successful. Increasing the binders was ineffective in controlling cracking in the present application. Drying rates necessary to be effective were impractical. So too were thin pass coatings; nor did increasing the solids, since it impeded the coating process.

### Summary of the Invention

In accordance with the present invention, a coating for a gas diffusion layer or electrode of a fuel cell or battery is provided which minimizes cracking. The coating comprises an aqueous dispersion of carbon black, a fluoropolymer, and one of graphite and carbon particulates. The majority of the particulates are substantially larger in size than the particles of the carbon black which may be within the range of, for example, approximately 13-95 nm. The carbon particulates may be cut or chopped carbon fibers, carbon or graphite flakes or platelets, carbon nanotubes, carbon fibrils, or carbon whiskers.

The carbon particulates may have a high length to diameter ratio.

Other features and advantages according to the present invention will become apparent from the following detailed description of the illustrated embodiments when read in conjunction with the accompanying drawings in which corresponding components are identified by the same reference numerals.

### Brief Description of the Drawings

Fig. 1 is a view of a coating on a gas diffusion layer fabric having cracks;
Fig. 2 is a view of a coating on a gas diffusion layer fabric according to an embodiment of the present invention; and
Fig. 3 is a diagram of an example of a fuel cell to which the present coating may be applied.

### Detailed Description of the Preferred Embodiment

In the present invention, an aqueous dispersion is applied as a coating to the substrate of a GDL of a battery or fuel cell (such as a methanol type fuel cell). The dispersion may include carbon black, fluoropolymers, and either carbon or graphite particulates, which also may include a surfactant. The ratio of fluoropolymer to carbon black may fall within the range of 5/95 to 70/30 by weight. The particulates may comprise 25% to 70% of the total coating weight. The addition of these particulates allows for a greater structural integrity as well as increasing the dispersion solid loading without increasing the viscosity. As a result, the present coating minimizes cracking in the coating layer of the GDL.

Carbon black is a black, amorphous, carbon pigment produced by the thermal decomposition of natural hydrocarbons. Generally, there are three different types of carbon black (i.e., furnace, channel, and lamp black). The nominal purity of it is roughly equivalent to 98.5% to 99.6%. The size of carbon black particles can be anywhere from 13 nm to 95 nm. Carbon black may have a spherical shape.

The size of the majority of the particulates may be substantially larger than the size of the carbon black particles. The particulates may have a length that is greater than the diameter thereof. A ratio of the length to diameter may fall between 1.5 to 10000. The particulates may include short length fibers such as cut carbon or graphite fibers, carbon or graphite flakes or platelets, carbon or graphite nanotubes, carbon or graphite fibrils, or carbon or graphite whiskers. The fibers may be 6 to 20 microns in diameter and 10 to 500 microns in length. The flakes or platelets may be 1 to 500 microns in length. The nanotubes, fibrils, and whiskers may be 5 to 100 nm in diameter and 5 to a few hundred microns in length. The introduction of these fibers as a compound of the coating minimizes mud cracking during drying.

Figure 2 depicts a coating on the surface of the GDL that includes chopped carbon fiber. As can be seen in the figure, there does not appear to be any visible cracks in the coating.

In addition to preventing the formation of cracks in the coating, the introduction of the particulates may also enhance electrical conductivity in the coating.

The GDL substrate may be formed from fibrous carbon preforms that can be of short length; paper; unidirectional tape; woven and nonwoven fabric including knitted; and stitch bonded multi-axial fabric. Coating may be applied using a variety of techniques such as dip coating, doctor blade, knife, spray, roll or slot.

The electrodes may be single bent pieces, which are adapted to be insertable into adjacent cells. Alternatively, an electrode can be made of two pieces and connected in a manner such that the two connected pieces act as a single electrode. In between the electrodes a membrane may be provided such that ions may be allowed to pass through the membrane.

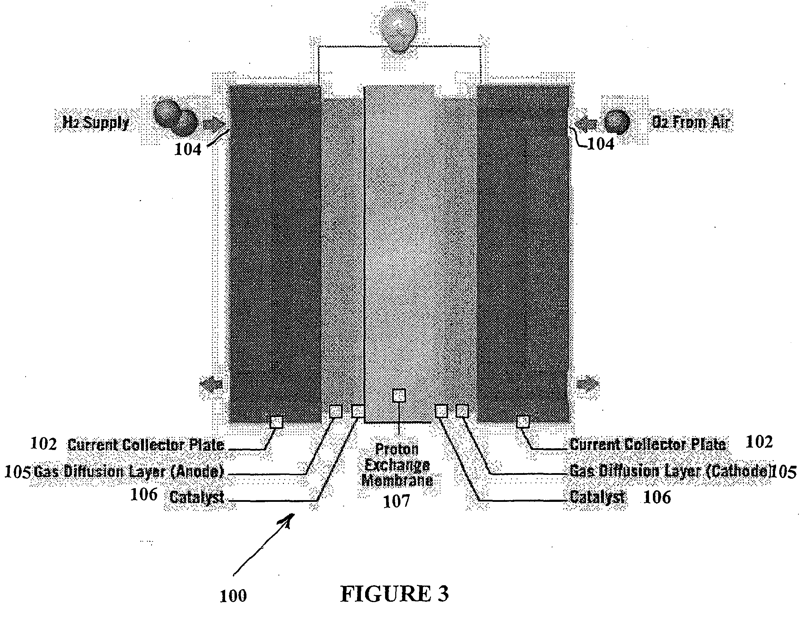

Figure 3 shows a schematic of fuel cell 100. Fuel cell 100 may include, among other things, current collector 102, gas passage 104, GDL 105, catalyst layer 106 and a proton exchange membrane 107 arranged as shown in Figure 3.

Accordingly, the introduction of the particulates may significantly reduce the amount of cracking in coatings prepared for GDL substrates. Total coating amounts of up to 300g/m² may be made with a minimum number of cracks as a result of these particulates. Since methanol fuel cells require heavier coatings than their hydrogen fueled counterpart, the above-described mixture is particularly advantageous in those instances.

Although a preferred embodiment of the present invention and modifications thereof have been described in detail herein, it is to be understood that this invention is not limited to this precise embodiment and modifications, and that other modifications and variations may be effected by one skilled in the art without departing from the spirit and scope of the invention as defined by the appended claims.

## Claims

1. A coating for a gas diffusion layer of a fuel cell or battery, said coating comprising carbon black, a fluoropolymer, and one of graphite or carbon particulates, wherein a portion of said particulates are substantially larger in size than said carbon black and provide structural integrity to the coating so as to minimize cracking thereof.

2. The coating of claim 1, wherein the size of particles of carbon black are within a range of approximately 13-95 nm.

3. The coating of claim 1, wherein said particulates are chopped carbon fibers.

4. The coating of claim 1, wherein said particulates are carbon or graphite flakes or platelets.

5. The coating of claim 1, wherein said particulates are carbon nanotubes.

6. The coating of claim 1, wherein said particulates are carbon fibrils.

7. The coating of claim 1, wherein said particulates are carbon whiskers.

8. The coating of claim 1, wherein said particulates have a high length to diameter ratio.

9. A method of coating a GDL substrate of a fuel cell or battery, said method comprising the steps of:
preparing a dispersion of carbon black, a fluoropolymer, and one of graphite or carbon particulates;
applying said dispersion to said substrate so as to coat the same; and
wherein said particulates are substantially larger in size than said carbon black and provide structural integrity to the coating so as to minimize cracking thereof.

10. The method of claim 9, wherein the size of particles of carbon black are within a range of approximately 13-95 nm.

11. The method of claim 9, wherein said particulates are chopped carbon fibers.

12. The method of claim 9, wherein said particulates are carbon or graphite flakes or platelets.

13. The method of claim 9, wherein said particulates are carbon nanotubes.

14. The method of claim 9, wherein said particulates are carbon fibrils.

15. The method of claim 9, wherein said particulates are carbon whiskers.

16. The method of claim 9, wherein said particulates have a high length to diameter ratio.

17. An article for use in a fuel cell or battery, said article being a GDL having a substrate being coated with a coating according to one of claims 1 to 8.

## Amended claims

### Amended claims in accordance with Rule 86(2) EPC.

**1.** A coating for a gas diffusion layer of a fuel cell or battery, said coating comprising carbon black, a fluoropolymer, and one of graphite or carbon particulates, wherein a portion of said particulates are substantially larger in size than said carbon black and provide structural integrity to the coating so as to minimize cracking thereof during drying of the coating.

**2.** The coating of claim 1, wherein the size of particles of carbon black are within a range of approximately 13-95 nm.

**3.** The coating of claim 1 or 2, wherein said particulates are chopped carbon fibers.

**4.** The coating of claim 1 or 2, wherein said particulates are carbon or graphite flakes or platelets.

**5.** The coating of claim 1 or 2, wherein said particulates are carbon nanotubes.

**6.** The coating of claim 1 or 2, wherein said particulates are carbon fibrils.

**7.** The coating of claim 1 or 2, wherein said particulates are carbon whiskers.

**8.** The coating of one of claims 1 to 7, wherein said particulates have a high length to diameter ratio ranging from about 1.5 to about 10,000.

**9.** A method of coating a gas diffusion layer substrate of a fuel cell or battery, said method comprising the steps of:
preparing a dispersion of carbon black, a fluoropolymer, and one of graphite or carbon particulates;
applying said dispersion to said substrate so as to coat the same; and
wherein said particulates are substantially larger in size than said carbon black and provide structural integrity to the coating so as to minimize cracking thereof during drying of the coating.

**10.** The method of claim 9, wherein the size of particles of carbon black are within a range of approximately 13-95 nm.

**11.** The method of claim 9 or 10, wherein said particulates are chopped carbon fibers.

**12.** The method of claim 9 or 10, wherein said particulates are carbon or graphite flakes or platelets.

**13.** The method of claim 9 or 10, wherein said particulates are carbon nanotubes.

**14.** The method of claim 9 or 10, wherein said particulates are carbon fibrils.

**15.** The method of claim 9 or 10, wherein said particulates are carbon whiskers.

**16.** The method of one of claims 9 to 15, wherein said particulates have a high length to diameter ratio ranging from about 1.5 to about 10,000.

**17.** An article for use in a fuel cell or battery, said article being a gas diffusion layer having a substrate being coated with a coating according to one of claims 1 to 8.
